# EUROPEAN PATENT APPLICATION

(11) **EP 4 306 244 A1**
(43) Date of publication of application: **17.01.2024**
(21) Application number: 22184724.7
(22) Date of filing: 13.07.2022
(51) Int. Cl.: B22F 10/368, B22F 5/00, B22F 10/28, B22F 10/85, B22F 12/90, B33Y 10/00, B33Y 30/00, B33Y 50/02, B33Y 80/00, B22F 5/04

(54) **3D PRINTING MONITORING AND CONTROL METHOD**

(71) Applicant: Siemens Energy Global GmbH & Co. KG, 81739 München (DE)
(72) Inventor: Avdovic, Pajazit, 60209 Norrköping (SE); Eriksson, Jonas, 61294 Finspong (SE); Fornander, Jerry, 61232 Finspang (SE)

(57) **Abstract**

The present invention refers to an improved method of 3D printing / metal powder bed fusion allowing to significantly improve the monitoring and control of such process by measuring temperature of the metal powder layer, analyzing the measured temperature based on the introduced energy, the melting temperature and the latent heat to identify disadvantageous temperature spots, and adapting the process based on the spots. This allows to identify even potential very minor problems to react very early and prevent potential problems arising in highly demanding applications utilizing correspondingly manufactured components. Furthermore, the present invention refers to a computer program product causing a computing entity to execute such method. Furthermore, the present invention refers to a 3D printing device being able to realize the inventive method.

## Description

The present invention refers to an improved method of 3D printing to manufacture 3D printed components. Additionally, the present invention refers to a computer program product adapted to realize the inventive method. Furthermore, the present invention refers to a storage device containing such computer program product. Additionally, the present invention refers to a 3D printing device adapted to manufacture a 3D printed component according to the inventive method.

3D printing is a relatively new manufacturing method being utilized in industrial applications. While printing components made of polymeric materials are relatively easy the utilization for metallic materials is still subject to additional problems and constantly increasing demands and problems to be solved. Especially, it was noted that especially components being subjected to high strain during their later application being utilized near their limits require significantly improved manufacturing processes.

In this context, it was noted that especially highly strained applications like continuous flow engine applications require a high reliability of accordingly manufactured components. In this context, it can be required to invest much effort into checking corresponding components with regard to their properties to avoid problems and even grave damages resulting from minor causes. Especially, in application cases like hot gas path components of continuous flow engines the combination of heat and mechanical strain already requires utilizing such components close to their possible strain and, thus, are very easily suffering from even very minor deviations or problems during manufacturing.

Thus, there is a need to further optimize the manufacturing procedure of such components to provide a safe and reliable manufacturing as well as the characteristics fulfilling the high demands in this context.

These problems are solved by the methods and products as disclosed hereafter and in the claims. Further beneficial embodiments are disclosed in the dependent claims and the further description. These benefits can be used to adapt the corresponding solution to specific needs or to solve further problems.

According to one aspect the present invention refers to a method of controlling a 3D printing process to manufacture a 3D printed component,
wherein the method contains selectively melting a metal powder layer by directing an energy beam on the metal powder layer to introduce energy into the metal powder layer, wherein the introduced energy selectively melts the metal powder layer to build the 3D printed component layer by layer,
wherein the metal powder layer consists of a metal powder, wherein the metal powder provides a melting temperature and a latent heat,
wherein the method contains continuously measuring the temperature of the melt melted powder material,
wherein the method contains analyzing the measured temperature taking into account the introduced energy, the melting temperature and the latent heat to identify disadvantageous temperature spots,
wherein the method contains automatically adapting the 3D printing process based on identified disadvantageous temperature spots.

Such "disadvantageous temperature spot" as used herein refers to a temperature spot providing a temperature being higher than a specified temperature. Such specified temperature can be a predetermined temperature in a simple system requiring extraordinarily little processing power. Herein, such predetermined temperature can be defined as absolute value like a 50° C above the melting temperature or a percentage value like 5% above the melting temperature. However, in typical embodiments such specified temperature is depending on the specific part of the 3D printed component to be created at that spot. For example, it can be a specified percentage value like 5% above the melting temperature at a location representing the outer surface of the 3D printing component and a specified percentage value like 30% above the melting temperature at a location representing the inner surface of the 3D printed component. Herein, such location representing the outer surface of the component is a location the melted part of the powder layer extends until the outer surface of the 3D printed component.

Such metal powder is a powder made from metal or a metal alloy. While small contents of, for example, organic substances or inorganic substances besides metals or metal alloys can be included to, for example, influence the flowing behavior of such metal powder, it is typically preferred that such additional components are at most 1 wt.-%, more preferred at most 0.1 wt.-%, even more preferred at most 0.05wt.-%, based on the total weight of the material of the metal powder layer. Herein, nonmetallic components like silica or carbon being included in an alloy are not included when determining such content.

It was noted that the inventive method can be very beneficially utilized to identify problems like problems during the manufacturing or deviations from known or simulated manufacturing procedures. Such problems during manufacturing can be, for example, inhomogeneities of the metal powder layer resulting from an inhomogeneous distribution of the metal powder or contamination of the metal powder by agglomerates or further material. Such deviations from known or simulated manufacturing procedures can be, for example, an increased or decreased number of components manufactured at the same time or a different arrangement of the components on a building plate. It was noted that even minor changes like the ones noted above in many cases still provide sufficient properties of the manufactured components. However, in case a remarkably high reliability is required like, for example, for continuous flow engine components, a significant chance is available that even very minor deviations result in a differing thermal behavior easily impairing the properties of the manufactured component in a way rendering its utilization not possible or even dangerous. It was surprisingly noted that such problems are significantly higher under real industrial applications than originally expected. A too high temperature can impair, for example, the overall 3D printing, the mechanical stability and/or the heat resistance of the resulting component. Such too high temperature easily results from, for example, a rearrangement of the components leaving not enough space in between resulting in that the heat cannot dissipate swift enough from the 3D printed part. A too low temperature can lead to, for example, an incomplete melting of the metal powder resulting in, for example, mechanical weaknesses, originating from, for example, a lack of fusion of the material, or a subsequent failure of the planned heat dissipation from the surface of the 3D printed component during its utilization based on the different heat conductivity in such area. Such too low temperature easily results from, for example, manufacturing a single component instead of the bulk resulting in a different overall temperature distribution profile within the metal powder layers and already manufactured parts of the components or interruptions of the 3D printing process allowing the material to further cool down and removing some base heat from the component that was originally included in the manufacturing procedure and originally intended to be compensated by a decreased introduction of energy in the metal powder layer at certain locations. For example, based on 3D printing a structure upon some already nearly molten material of the selectively melted metal powder layer below.

While an adaption of the manufacturing procedure can be typically realized by simulating the manufacturing in advance the required processing power is huge and renders such task being not realistically possible for future applications requiring a flexible adaption and more robust process allowing to easily implement such method for a broad industrial application. Allowing to, for example, swiftly change the number of components manufactured to serve the current needs or utilizing a different type of 3D printing device being currently available requiring the rearrangement of the components on a building plate based on differing geometrical provisions of building plate being available in such device. The inventive method allows to detect resulting deviations at an early stage without requiring much processing power allowing to significantly improve the utilization of 3D printing for such sensitive applications. Such improved flexibility and reliability are of significant importance to implement such method for the future.

According to a further aspect the present invention refers to a computer program product, tangibly embodied in a machine-readable storage medium, including instructions operable to cause a computing entity to execute an inventive method.

According to a further aspect the present invention refers to a storage device for providing an inventive computer program product, wherein the device stores the computer program product and/or provides the computer program product for further use.

According to a further aspect the present invention refers to a 3D printing device adapted to manufacture a 3D printed component according to an inventive method.

To simplify understanding of the present invention it is referred to the detailed description hereafter and the figures attached as well as their description. Herein, the figures are to be understood being not limiting the scope of the present invention but disclosing preferred embodiments explaining the invention further.
Fig. 1 shows a schematic drawing of a 3D printed component located in a powder bed during the layerwise 3D printing process, wherein the automatic adaption according to the inventive method was not applied.
Fig. 2 shows a scheme of the inventive method.
Fig. 3 shows a further scheme of the inventive method.

Preferably, the embodiments hereafter contain, unless specified otherwise, at least one processor and/or data storage unit to implement the inventive method.

Unless specified otherwise terms like "calculate", "process", "determine", "generate", "configure", "reconstruct" and comparable terms refer to actions and/or processes and/or steps modifying data and/or creating data and/or converting data, wherein the data are presented as physical variable or are available as such.

The term "data storage" or comparable terms as used herein, for example, refer to a temporary data storage like RAM (Random Access Memory) or long term data storage like hard drives or data storage units like CDs, DVDs, USB sticks and the like. Such data storage can additionally include or be connected to a processing unit to allow a processing of the data stored on the data storage.

The term "continuous flow engine" as used herein refers to a device utilizing a continuous stream of a fluid like a gas or a liquid. Herein, such continuous flow engine typically provides a rotor located in the fluid and interacting with said fluid. Herein, such fluid can either be utilized to provide a rotational movement of the rotor being able to be transformed into, for example, electrical energy. Examples of such continuous flow engines are gas turbines and steam turbines. Alternatively, the rotor can actively be rotated allowing to, for example, compress the fluid. An example of such application is a compressor as utilized, for example, in oil refineries.

According to one aspect the present invention refers to a method as specified above.

According to a further embodiment it is preferred that the 3D printed component is a continuous flow engine component, more preferred a hot gas path continuous flow engine component. It was noted that such applications typically benefit significantly from the inventive method based on the high requirements of such applications.

According to further embodiments it is preferred that the step of analyzing the measured temperature takes into account the temperature measured in lower layers of the 3D printed component. Herein, such analyzing can, for example, be utilized to identify deviations from an expected behavior of the powder material layer. Such deviation can be a too high or too low temperature of the currently printed powder material layer. Such deviation indicates that the heat transfer is increased or decreased compared to the expected behavior.

According to further embodiments it is preferred that the introduction of energy during the selectively melting the metal powder layer is realized by direction a laser beam or electron beam onto the metal powder layer. Corresponding manufacturing methods provide a very homogeneous and controlled energy introduction into the metal powder layer allowing to reliably control this aspect of the process and significantly reducing requirements like additional measuring device of the energy introduced to keep track of this characteristic allowing the realize the inventive method. Therefore, reducing the overall effort required to put the inventive method into practice.

According to further embodiments it is preferred that the method contains adapting the 3D printing process based on the deviations of the measured temperature of the metal powder layer and the theoretical temperature,
wherein the theoretical temperature represents a temperature based on available thermal energy in the 3D printed component and the metal powder and the energy introduced by the energy beam. Herein, such deviations can easily originate from defects of the metal powder layer or problems during the 3D printing. Like interruptions or deviations of the temperature of some protective gas. Allowing to, for example, increase the 3D printing speed by increasing the energy introduced by the energy beam and faster movement of the beam in case the temperature is lower than expected or decrease or even pause the manufacturing in case the temperature is too high. The skilled person is well aware how to calculate such theoretical temperature based on available thermal energy in the 3D printed component and the metal powder and the energy introduced by the energy beam. Utilizing existing models taking into account the heat loss into the surroundings like parts of the 3D printing device and the atmosphere above the powder material layer and distribution inside the powder material and 3D printed the theoretical temperature at a given location can be determined. As well as how the temperature should change when introducing energy by

According to further embodiments it is preferred that the method contains storing temperature data of metal powder layers printed,
wherein the methods contains utilizing a theoretical temperature of the metal powder layer,
wherein the theoretical temperature of the metal powder layer is acquired based on historical data, a simulation of the 3D printing, calculating the temperature based on the stored temperature data of the metal powder layers printed and the energy introduced during melting the metal powder bed, or combinations thereof,
wherein the method contains identifying defects of the metal powder layer based on the deviations of the measured temperature of the metal powder layer and the theoretical temperature of the of the metal powder layer,
wherein energy introduced into the metal powder layer is adapted based on the defects of the metal powder layer. It was noted that the inventive method allows to reliably identify defects like inhomogeneities, or contaminations of the metal powder based on the difference of the measured temperature and theoretical temperature. Taking into account the inventive method based on the heat energy monitoring taking into account the melting temperature and latent heat allows to very easy monitor the output resulting from the energy introduced and indirectly identify problems. Allowing to instantly adapt the manufacturing procedure to solve the specific needs of the manufacturing.

According to further embodiments it is preferred that the step of analyzing the measured temperature identify disadvantageous temperature spots includes determining problems for subsequently to be printed powder material layers,
wherein the 3D printing process of subsequent powder material layers is adapted to compensate for the disadvantageous temperature spots. It was noted that utilizing the inventive method allows to identify potential disadvantageous temperature spots like overheating zones at an early stage that can be compensated quite easily at such stage. For example, by including interruptions of the printing procedure to allow the material to cool down or to adapt the printing speed or location of the metal powder layer where to start the print to allow some localized to at last partially dissipate.

According to further embodiments it is preferred that the measured temperature of at least 80% of the 3D printed layers of a product and/or the identified disadvantageous temperature spots are stored in a database. Storing such data allows to, for example, subsequently evaluate possible applications not even known at the time of print of a 3D printed component with regard to potential problems or the like. Additionally, it allows to, for example, run degradation models with a surprisingly improved accuracy to even improve the existing very sophisticated and reliable wear out and maintenance requirement calculation already available.

According to further embodiments it is preferred that the method contains the step of assigning a unique identifier to the 3D printed component,
wherein the method contains the step of assigning the unique identifier to manufacturing data collected according to an inventive method,
wherein the manufacturing data and the unique identifier in a database. It was noted that laying down such possibility to identify the very specific 3D printed component at any later time is surprisingly beneficial for the inventive method. For example, the data acquired during such method allows to ensure the clarification of subsequent problems. Like in case the component does not fulfill the demanded requirements and needs to be serviced early. Leading to a significant impact on the utilization of, for example, continuous flow engines such as gas turbines being adapted to run over months and even years without interruption. As the inventive method allows to manufacture components with a reliability enabling a utilization even closer to their limit than ever before the possibility to determine the cause of later problems provides a surprising huge benefit for such method.

According to a further aspect the present invention refers to a computer program product, tangibly embodied in a machine-readable storage medium, including instructions operable to cause a computing entity to execute an inventive method.

According to a further aspect the present invention refers to a storage device for providing an inventive computer program product, wherein the device stores the computer program product and/or provides the computer program product for further use.

According to a further aspect the present invention refers to a 3D printing device adapted to manufacture a 3D printed component according to an inventive method.

According to further embodiments it is preferred that the 3D printing device contains an infrared camera adapted to constantly monitor the infrared radiation from the powder material layer. It was noted that such constant monitoring of the temperature of the powder material surface allows to additionally detect deviations of the cooling down of the powder material layer indicating that the heat distribution and/or cooling down of the lower powder material layers differs from an expected behavior and indicates problems.

The following detailed description of the figure uses the figure to discuss illustrative embodiments, which are not to be construed as restrictive, along with the features and further advantages thereof.

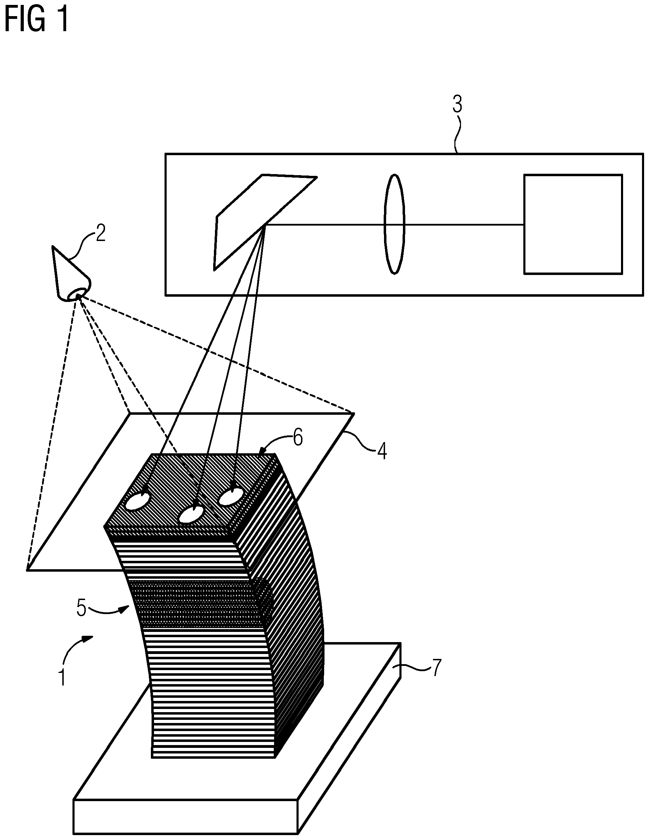

Figure 1 shows a schematic drawing of a 3D printed component 1 located in a powder bed during the layerwise 3D printing process, wherein the automatic adaption according to the inventive method was not applied. Still an inventive 3D printing device was utilized being adapted to constantly monitor the temperature of the metal powder layer. Herein, the component 1 is built upon a building plate 7 layer by layer from a metal powder material. Said metal powder material is not shown in figure 1 enabling to show the side of the already 3D printed part of the component 1.

The metal powder material is spread as metal powder material layer and selectively melted by irradiated the metal powder material with a laser beam originating from a laser source 3. By irradiating the plurality of subsequent metal powder layers, the component 3 is continuously build up over time. During the layerwise manufacturing of the component 1 the energy introduced by the laser resulted in a disadvantageous temperature spot within the representing a local overheating area 5 originating from the repeated melting at the same location with the identical laser power of the laser source 3.

The disadvantageous temperature spot was noted by the temperature measurement device 2 being an infrared camera constantly monitoring the heat distribution while the selective laser melting takes place as well as during application of the subsequent metal powder material layer before the next selective laser melting takes place. Based on the temperature measured and taking into account the melting temperature and latent heat the heat energy content is monitored and

The example as shown in figure 1 purposely did not contain the adaption of the 3D printing process according to the inventive method to avoid the creation of the local overheating area. Based on this overheating area 5 constantly build up during the repeated selective laser melting steps the structure provided a local weakness based on a lack of cooling down enough to harden the material. The melting of the metal powder layers above increased the temperature of the lower layers above the melting temperature as the heat transmitted from the upper layers as well as the inherent heat still contained in the lower layers went beyond the current heat contained in the material and the latent heat resulting in the material going beyond the melting temperature.

Such partially remelted lower layers easily result in many possible defects of the manufacture 3D printed component. A very simply to understand problem is, for example, the not melted metal powder material of the lower metal powder layers can be introduced into the remelted material significantly reducing the mechanical strength and other properties of the manufactured component.

Corresponding manufacturing methods provide a very homogeneous and controlled energy introduction into the metal powder layer allowing to reliably control this aspect of the process and significantly reducing requirements like additional measuring device of the energy introduced to keep track of this characteristic allowing the realize the inventive method. Therefore, reducing the overall effort required to put the inventive method into practice.

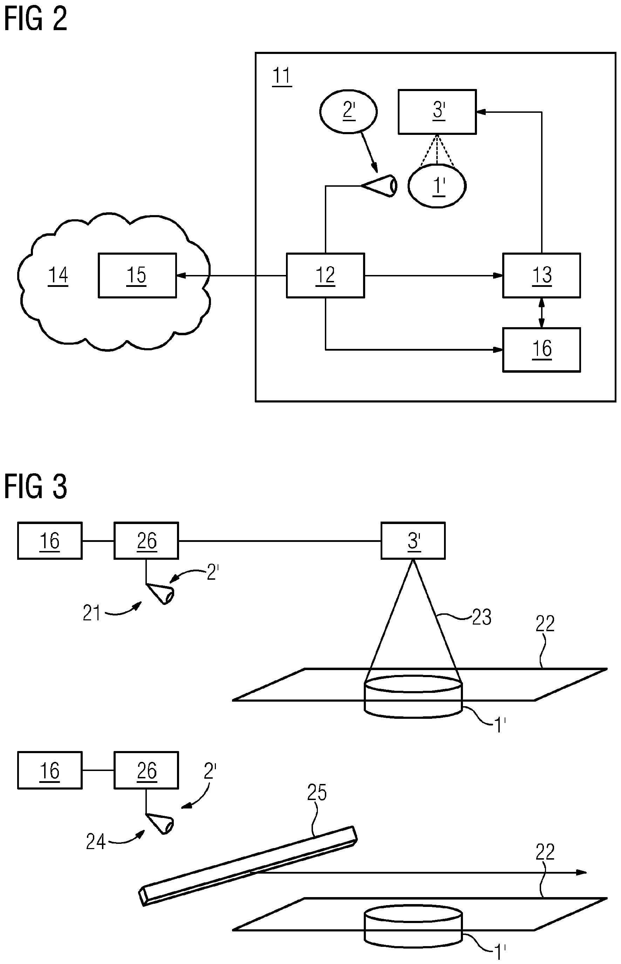

Figure 2 shows a scheme of the inventive method. Herein, the 3D printed component 1 being a turbine vane to be utilized in a gas turbine is also manufactured layer by layer by selectively melting a metal powder material with a laser from a laser source 3. Like the comparative example of figure 1 the temperature of the powder material layer is continuously measured with a temperature measurement device 2 being an infrared camera. The measurement data is transmitted to a processing unit 12 analyzing the measurement data taking into account the melting temperature and latent heat of the metal powder material. Based on the measured temperature including the stagnating temperature during the phase change based on the latent heat and the energy introduced by the laser source 3 the temperature within the topmost metal powder layer and the lower already printed layers is monitored. In case a disadvantageous temperature spot is detected the information is forwarded to the control unit 13 amending the manufacturing procedure to take this disadvantageous temperature spot into account. For example, the surprisingly low temperature based on an increased temperature dissipation based on a differing arrangement of the 3D printed component to be manufactured or simply some paused manufacturing based on some malfunction can be compensated by increasing the energy introduced by the laser source 3. For example, some identified disadvantageous temperature spot based on some surprisingly increased temperature of the metal powder layer originating form from swifter manufacturing of each layer based on an decreased overall number of simultaneously 3D printed components can be compensated by taking the already available heat into account, wherein the energy introduced by the laser source 3 is decreased by the control unit 13. Alternatively, the melting path can be rearranged by the control unit 13 resulting in the laser starting to melt the next metal powder layer at the opposite end of the component 1 to allow the powder material to cool down more.

The collected data and data with regard to the disadvantageous temperature spots is forwarded to a cloud database 15 located in a cloud 14 allowing to easily exchange data with an external service provider. It was noted that this allows to easily make use of the expertise of specialized experts. For example, deviations between the measured temperature and theoretical temperature that should result from the energy introduced often indicates some problem like a contamination of the powder material. Enabling some cloud-based data exchange proved to be a very efficient method to make use of such external expertise to evaluate such deviation with regard to their potential impact on the overall printing process. Based on the value of collected expertise and experience it was also noted that insight into such experience will become less and less and providing such data exchange possibility already solves the problem to enable the utilization of third party databases that will not be shared over the long term to make adaptions or even stop manufacturing procedures ending up in malfunctioning components at an early stage.

Furthermore, the data collected during the inventive method are also stored in a local database 16. While the value of external expertise is not to be underestimated the collected data cannot only be utilized to easily adapt future manufacturing processes upfront. It is already clearly available that after a brief period some automatic optimization process can be realized based on, for example, reinforced learning to, for example, further decrease the required processing power to provide improved manufacturing procedures. It was noted that based on first simulations storing the measured temperature of at least 80% of the 3D printed layers of a product and/or the identified disadvantageous temperature spots is estimated to provide a significantly improved benefit compared to a lower amount of data stored and taking into account the effort and resources required to store such data and process it subsequently.

Furthermore, storing such data can also be beneficial for subsequent utilization requirements to enable a post manufacturing assessment whether future utilization requirements can be fulfilled. It was noted that mere usable/no usable assessment at the manufacturing time provides a limited benefit over long term. It was noted that for applications like continuous flow engine components and especially hot gas path components of continuous flow engines their change of utilization over long term gives rise to questions being difficult to be answered without such collected data. Despite the additional effort the benefit obtained by enabling such later assessment is easily compensating such effort for corresponding applications.

Figure 3 shows a further scheme of the inventive method explaining the process within the 3D printing device in more detail. Herein, two elements of the 3D printing process are described in more detail. In more detail a scheme of the selective melting 21 of the powder material and the metal powder distribution 24 to provide a further metal powder layer are shown.

During the selective melting the laser source 3' emits an energy beam 23 being a laser beam being directed onto the surface of the metal powder layer 22 being selectively melted. Resulting from this a new layer of the 3D printed component 1' is manufactured. The 3D printed component being only shown in a very schematic way is a turbine blade of a gas turbine. During this 3D printing process the temperature measurement device 2' monitors the temperature of the metal powder layer 22 and the continuously manufactured part of the 3D printed component 1' resulting from the selective melting. The data acquired by the temperature measurement device 2' is forwarded to a processing unit 26 processing the data. Herein, the processing unit 26 analyzes the measured temperature taking into account the introduced energy, the melting temperature and the latent heat to identify disadvantageous temperature spots. Depending on such disadvantageous temperature spots the processing unit 26 automatically triggers an adaption of the 3D printing process based on identified disadvantageous temperature spots to prevent an undesired deformation of the 3D printed component based on the disadvantageous temperature spots.

The processing unit 26 in this context retrieves data regarding lower layer from a local database 16 storing data from the lower layers. The corresponding data is utilized by the processing unit 26 to evaluate whether the temperature already stored in the lower layers in addition to the one introduced and measured in the top layer may directly during printing the present top layer or indirectly during printing a subsequent layer may result in a disadvantageous temperature spot.

Essentially, the same process of monitoring and evaluating takes place during the metal powder distribution 24 step. Herein, a metal powder distributor 25 moves as indicated above the metal powder layer and deposits a new metal powder layer on top. The temperature measurement device 2' also monitors the temperature during such step and send the data to the processing unit 26. The data can be beneficially utilized by the processing unit to identify deviations from the theoretical temperature and its developments based on cooling down and temperature distribution processes being able to be predicted using available models. Using such identified deviation, a plurality of additional data can be acquired. Like inhomogeneous metal powder distributions, cavities, incorrectly melted layers providing different thermal energy flows than a metal powder material, and the like. Allowing to include such information into the evaluation of possible disadvantageous temperature spots and the like to further optimize the insight and possibilities. Herein, the processing unit can retrieve data from the local database 16 to support the identification of deviations and store corresponding acquired additional information in said local database 16.

The present invention was only described in further detail for explanatory purposes. However, the invention is not to be understood being limited to these embodiments as they represent embodiments providing benefits to solve specific problems or fulfilling specific needs. The scope of the protection should be understood to be only limited by the claims attached.

## Claims

1. Method of controlling a 3D printing process to manufacture a 3D printed component (1, 1'),
wherein the method contains selectively melting a metal powder layer (22) by directing an energy beam (23) on the metal powder layer (22) to introduce energy into the metal powder layer (22),
wherein the introduced energy selectively melts the metal powder layer (22) to build the 3D printed component (1, 1') layer by layer,
wherein the metal powder layer (22) consists of a metal powder,
wherein the metal powder provides a melting temperature and a latent heat,
wherein the method contains continuously measuring the temperature of the metal powder layer (22),
wherein the method contains analyzing the measured temperature taking into account the introduced energy, the melting temperature and the latent heat to identify disadvantageous temperature spots,
wherein the method contains automatically adapting the 3D printing process based on identified disadvantageous temperature spots.

2. The method according to claim 1,
wherein the 3D printed component is a continuous flow engine component, more preferred a hot gas path continuous flow engine component.

3. The method according to any of claims 1 to 2,
wherein the step of analyzing the measured temperature takes into account the temperature measured in lower layers of the 3D printed component (1, 1').

4. Method according to any of claims 1 to 3, wherein the introduction of energy during the selectively melting the metal powder layer (22) is realized by direction a laser beam or electron beam onto the metal powder layer (22).

5. Method according to any of claims 1 to 4,
wherein the method contains storing temperature data of metal powder layers (22) printed,
wherein the methods contains utilizing a theoretical temperature of the metal powder layer (22),
wherein the theoretical temperature of the metal powder layer (22) is acquired based on historical data, a simulation of the 3D printing, calculating the temperature based on the stored temperature data of the metal powder layers (22) printed and the energy introduced during melting the metal powder bed, or combinations thereof,
wherein the method contains identifying defects of the metal powder layer (22) based on the deviations of the measured temperature of the metal powder layer (22) and the theoretical temperature of the of the metal powder layer (22), wherein energy introduced into the metal powder layer (22) is adapted based on the defects of the metal powder layer (22).

6. Method according to claim 5,
wherein the method contains adapting the 3D printing process based on the deviations of the measured temperature of the metal powder layer (22) and the theoretical temperature, wherein the theoretical temperature represents a temperature based on available thermal energy in the 3D printed component and the metal powder and the energy introduced by the energy beam (23).

7. Method according to any of claims 1 to 6,
wherein the step of analyzing the measured temperature identify disadvantageous temperature spots includes determining problems for subsequently to be printed powder material layers,
wherein the 3D printing process of subsequent powder material layers is adapted to compensate for the disadvantageous temperature spots.

8. Method according to any of claims 1 to 7,
wherein the measured temperature of at least 80% of the 3D printed layers of a product and/or the identified disadvantageous temperature spots are stored in a database.

9. Method according to any of claims 1 to 8,
wherein the method contains the step of assigning a unique identifier to the 3D printed component (1, 1'),
wherein the method contains the step of assigning the unique identifier to manufacturing data collected according to the method according to any of claims 1 to 8,
wherein the manufacturing data and the unique identifier in a database.

10. Computer program product, tangibly embodied in a machine-readable storage medium, including instructions operable to cause a computing entity to execute a method according to any of claims 1 to 9.

11. Storage device for providing a computer program product according to claim 10, wherein the device stores the computer program product and/or provides the computer program product for further use.

12. 3D printing device (11) adapted to manufacture a 3D printed component (1, 1') according to a method according to any of claims 1 to 9.

13. 3D printing device (11) according to claim 12, wherein the 3D printing device contains an infrared camera adapted to constantly monitor the infrared radiation from the powder material layer.
